# EUROPEAN PATENT APPLICATION

(11) **EP 2 849 507 A1**
(43) Date of publication of application: **18.03.2015**
(21) Application number: 12876200.2
(22) Date of filing: 08.05.2012
(51) Int. Cl.: H04W 72/04

(54) **REFERENCE SIGNAL MEASUREMENT METHOD, BASE STATION, AND USER EQUIPMENT**

(71) Applicant: Fujitsu Limited, Kawasaki-shi, Kanagawa 211-8588 (JP)
(72) Inventor: WU, Lianhai, Beijing 100025 (CN); LI, Hongchao, Beijing 100025 (CN); CHANG, Ningjuan, Beijing 100025 (CN); ZHOU, Hua, Beijing 100025 (CN)
(74) Representative: Ward, James Norman
(86) International application number: PCT/CN2012/075189
(87) International publication number: WO 2013/166657

(57) **Abstract**

Embodiments of the present disclosure provide a measurement method for a reference signal, a base station and UE. The measurement method includes: transmitting, by a base station to UE, indication information indicating whether to process the reference signal with respect to interference cancellation, when configuring the UE with radio resource management measurement; and receiving, by the base station, a result of the radio resource management measurement transmitted by the UE. With the embodiments of the present disclosure, the base station side is enabled to learn whether the UE side performs processing of interference cancellation, thereby accurately obtaining a measurement result of the reference signal.

## Description

### Technical Field

The present disclosure relates to the field of communications, and in particular to a measurement method for a reference signal, a base station and UE.

### Background

In order to improve UE coverage under an LTE-advance (LTE-A) system and improve the throughput of the system and data transmission ratio of the UE, heterogeneous nodes are introduced. For example, the heterogeneous nodes include a home eNodeB (HeNB), and a hot-spot covered pico cell, etc. These heterogeneous nodes use relatively low transmission power to cover a specific area or UE, with a manner of networking being relatively flexible.

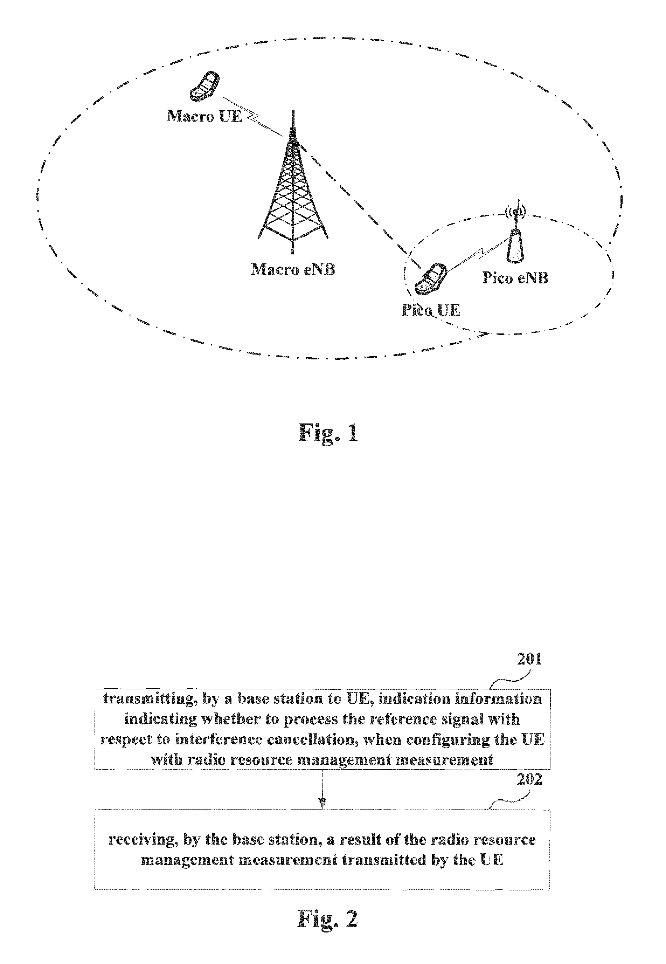

Figure 1 is a schematic diagram of a scenario where a macro cell and a pico cell coexist in a heterogeneous network. As shown in Fig. 1, a macro eNB may serve for macro UE, and a micro eNB (such as a pico eNB; however, it is not limited thereto) may serve for micro UE (such as pico UE). If a pico cell employs a coverage expansion technology, it is possible that downlink transmission of the macro eNB brings intense interference to downlink transmission of the pico cell; and UE in a cell range expansion (CRE) area of the pico cell is subjected to relatively intense interference of a macro cell.

Currently, the macro eNB may configure some subframes into almost blank subframes (ABSs). In an ABS, low power is used in transmission or some resources are emptied for not transmitting power at positions of other physical resources, except that rated power is used by a common reference symbol and necessary tiny control channels for transmission.

However, it was found by the inventors that in an existing ABS scheme, in measuring a reference signal, a base station side is unable to learn whether a UE side has performed processing of interference cancellation, hence, the base station side is unable to accurately obtain a measurement result of the reference signal.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

Embodiments of the present disclosure provide a measurement method for a reference signal, a base station and UE, with an object being to enable the base station side to learn whether the UE side performs processing of interference cancellation, thereby accurately obtaining a measurement result of the reference signal.

According to one aspect of the embodiments of the present disclosure, there is provided a measurement method for a reference signal, including:
transmitting, by a base station to UE, indication information indicating whether to process the reference signal with respect to interference cancellation, when configuring the UE with radio resource management measurement; and
receiving, by the base station, a result of the radio resource management measurement transmitted by the UE.

According to another aspect of the embodiments of the present disclosure, there is provided a measurement method for a reference signal, including:
selecting, by UE, whether to use processing of interference cancellation, when the UE performs radio resource management measurement on the reference signal; and
transmitting to a base station, a result of the radio resource management measurement and indication information indicating whether the processing of interference cancellation has been performed.

According to a further aspect of the embodiments of the present disclosure, there is provided a measurement method for a reference signal, including:
transmitting, by a base station to UE, multiple pieces of indication information indicating whether to process the reference signal with respect to interference cancellation, when configuring the UE with channel state information measurement, the multiple pieces of indication information being corresponding to multiple configured subframe sets; and
receiving, by the base station, a result of the channel state information measurement transmitted by the UE.

According to still another aspect of the embodiments of the present disclosure, there is provided a measurement method for a reference signal, including:
receiving, by UE, an available almost blank subframe set transmitted by a base station;
determining whether to use processing of interference cancellation in performing channel state information measurement on the reference signal, according to the available almost blank subframe set and multiple configured subframe sets; and
transmitting, by the UE to the base station, a result of channel state information measurement.

According to still another aspect of the embodiments of the present disclosure, there is provided a measurement method for a reference signal, including:
transmitting, by a base station to UE, an available almost blank subframe configured for the UE, when configuring the UE with channel state information measurement; and
receiving, by the base station, a result of the channel state information measurement transmitted by the UE.

According to still another aspect of the embodiments of the present disclosure, there is provided a base station, including:
an information transmitting unit configured to transmit to UE indication information indicating whether to process a reference signal with respect to interference cancellation, when configuring the UE with radio resource management measurement; and
a result receiving unit configured to receive a result of the radio resource management measurement transmitted by the UE.

According to still another aspect of the embodiments of the present disclosure, there is provided UE, including:
a signal measuring unit configured to select whether to use processing of interference cancellation, when performing radio resource management measurement on a reference signal; and
a result transmitting unit configured to transmit to a base station, a result of the radio resource management measurement and indication information indicating whether the processing of interference cancellation has been performed.

According to still another aspect of the embodiments of the present disclosure, there is provided a base station, including:
an information transmitting unit configured to transmit to UE multiple pieces of indication information indicating whether to process a reference signal with respect to interference cancellation, when configuring the UE with channel state information measurement, the multiple pieces of indication information being corresponding to multiple configured subframe sets; and
a result receiving unit configured to receive a result of the channel state information measurement transmitted by the UE.

According to still another aspect of the embodiments of the present disclosure, there is provided UE, including:
an information receiving unit configured to receive an available almost blank subframe set transmitted by a base station;
a signal measuring unit configured to determine whether to use processing of interference cancellation in performing channel state information measurement on a reference signal, according to the available almost blank subframe set and multiple configured subframe sets; and
a result transmitting unit configured to transmit a result of channel state information measurement to the base station.

According to still another aspect of the embodiments of the present disclosure, there is provided a base station, including:
an information transmitting unit configured to transmit to UE, an available almost blank subframe configured for the UE, when configuring the UE with channel state information measurement; and
a result receiving unit configured to receive a result of the channel state information measurement transmitted by the UE.

According to still another aspect of the embodiments of the present disclosure, there is provided a computer-readable program, wherein when the program is executed in a base station, the program enables a computer to carry out the measurement method for a reference signal as described above in the base station.

According to still another aspect of the embodiments of the present disclosure, there is provided a storage medium in which a computer-readable program is stored, wherein the computer-readable program enables a computer to carry out the measurement method for a reference signal as described above in a base station.

According to still another aspect of the embodiments of the present disclosure, there is provided a computer-readable program, wherein when the program is executed in UE, the program enables a computer to carry out the measurement method for a reference signal as described above in the UE.

According to still another aspect of the embodiments of the present disclosure, there is provided a storage medium in which a computer-readable program is stored, wherein the computer-readable program enables a computer to carry out the measurement method for a reference signal as described above in UE.

An advantage of the embodiments of the present disclosure resides in that by transmitting indication information indicating whether to process the reference signal with respect to interference cancellation by the base station side or the UE side, the base station side is enabled to learn whether the UE side performs processing of interference cancellation, thereby accurately obtaining a measurement result of the reference signal.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated reduced in size.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.
Figure 1 is a schematic diagram of a scenario where a macro cell and a pico cell coexist in a heterogeneous network;
Figure 2 is a flowchart of the measurement method of Embodiment 1 of the present disclosure at a base station side;
Figure 3 is a schematic diagram of the structure of the base station of Embodiment 1 of the present disclosure;
Figure 4 is a flowchart of the measurement method of Embodiment 2 of the present disclosure at a UE side;
Figure 5 is a schematic diagram of the structure of the UE of Embodiment 2 of the present disclosure;
Figure 6 is a flowchart of the measurement method of Embodiment 3 of the present disclosure at a base station side;
Figure 7 is a schematic diagram of the structure of the base station of Embodiment 3 of the present disclosure;
Figure 8 is a flowchart of the measurement method of Embodiment 4 of the present disclosure at a base station side;
Figure 9 is a flowchart of the measurement method of Embodiment 4 of the present disclosure at a UE side;
Figure 10 is another flowchart of the measurement method of Embodiment 4 of the present disclosure;
Figure 11 is a schematic diagram of the structure of the UE of Embodiment 4 of the present disclosure; and
Figure 12 is a schematic diagram of the structure of the base station of Embodiment 4 of the present disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In an almost blank subframe (ABS) scheme, a common reference signal (CRS) of a macro base station transmits at normal power, thereby bringing intense interference to a pico base station. For a scenario where CRSs of the macro base station and the pico base station collide, interference cancellation needs to be performed to the CRSs in using the CRSs for channel estimation demodulation.

For radio resource management (RRM) measurement, in measuring a pico cell in a restriction set by pico UE and macro UE, interference cancellation needs to be performed on collided CRSs of neighboring cells, so as to reflect an actual demodulation performance. If no interference cancellation is performed by the UE, the network side needs to be corrected. Hence, for RRM measurement, a base station (eNB) needs to learn whether interference cancellation is employed for a reported result of measurement.

Furthermore, for pico UE configured with two channel state information (CSI) measurement sets, one of the measurement sets reflects an ABS resource performance, and the other reflects a non-ABS performance. For the measurement set reflects an ABS resource performance, the pico UE needs to perform interference cancellation on it. However, according to an existing protocol, the UE is unable to distinguish a measurement set in which interference cancellation needs to be performed.

It should be noted that a CRS is taken as an example in the above description, in which a scenario is schematically explained where the base station side needs to learn whether the UE side performs processing of interference cancellation. However, the present disclosure is not limited thereto, and a particular implementation scenario and a reference signal may be determined according to an actual situation.

### Embodiment 1

An embodiment of the present disclosure provides a measurement method for a reference signal, applicable to radio resource management measurement. Fig. 2 is a flowchart of the measurement method of the embodiment of the present disclosure at a base station side. As shown in Fig. 2, the measurement method includes:
step 201: transmitting, by a base station to UE, indication information indicating whether to process the reference signal with respect to interference cancellation, when configuring the UE with radio resource management measurement; and
step 202: receiving, by the base station, a result of the radio resource management measurement transmitted by the UE.

In this embodiment, the UE may perform the RRM measurement by using the reference signal, the reference signal may be a common reference signal (CRS). However, it is not limited thereto, and a particular reference signal may be determined according to an actual situation.

In this embodiment, the indication information may be carried by an information element (IE), and may be one bit information added to CellsToAddMod IE. That is, for whether it needs to use indication of a CRS interference technology, one bit IE may be added in measurement configuration, for use in indication in CellsToAddMod IE; wherein, the relevant art may be referred to for a particular content of the CellsToAddMod IE, which shall not be described herein any further.

For example, "0" may be used to indicate that the UE needs not to use a CRS interference technology, and "1" may be used to indicate that the UE needs to use a CRS interference technology. However, it is not limited thereto, for example, multiple bits may be used for indication, and a particular mode of implementation may be determined according to an actual situation.

In particular implementation, in a scenario of implementation, the base station may be a macro base station, and the UE may be served by the macro base station, that is the UE is macro UE. And step 201 may include: transmitting the indication information to the UE by the macro base station, when a measurement object of the UE is a micro base station configured with an almost blank subframe.

In such a scenario of implementation, when the macro base station performs the measurement configuration, if the measurement object is a pico eNB configured with an ABS, the macro base station may inform the UE in the measurement configuration of whether CRS processing of interference cancellation needs to be used in the measurement of the pico eNB.

In particular implementation, in another scenario of implementation, the base station may be a micro base station (such as a pico eNB), and the UE may be served by the micro base station. And step 201 may include: transmitting the indication information to the UE by the micro base station when a measurement object of the UE is a serving cell.

In such a scenario of implementation, when the pico eNB performs measurement configuration on pico UE subjected to severe interference, if the measurement object is the serving cell, the pico eNB may inform the UE in the measurement configuration of whether CRS processing of interference cancellation needs to be used in the measurement of the serving cell.

In this embodiment, as the base station has transmitted the indication information to the UE indicating whether to process the reference signal with respect to interference cancellation in performing RRM measurement configuration on the UE, measurement may be performed at the UE side according to the indication information, and the RRM measurement result may be transmitted to the base station side.

That is, for the measurement configuration, the base station definitely indicates that measurement of CRS IC (interference cancellation) is to be used, and the UE uses the CRS IC technology in the measurement; otherwise, the UE does not use the CRS IC in the measurement.

In this embodiment, the base station side may receive the RRM measurement result transmitted by the UE. As the base station has informed the UE in the measurement configuration of whether the interference cancellation needs to be used, the base station may learn whether the received measurement result uses the interference cancellation, and may accurately process the measurement result.

An embodiment of the present disclosure further provides a base station, corresponding to the above-described measurement method, with the contents identical to those in the above-described method being not going to be described any further.

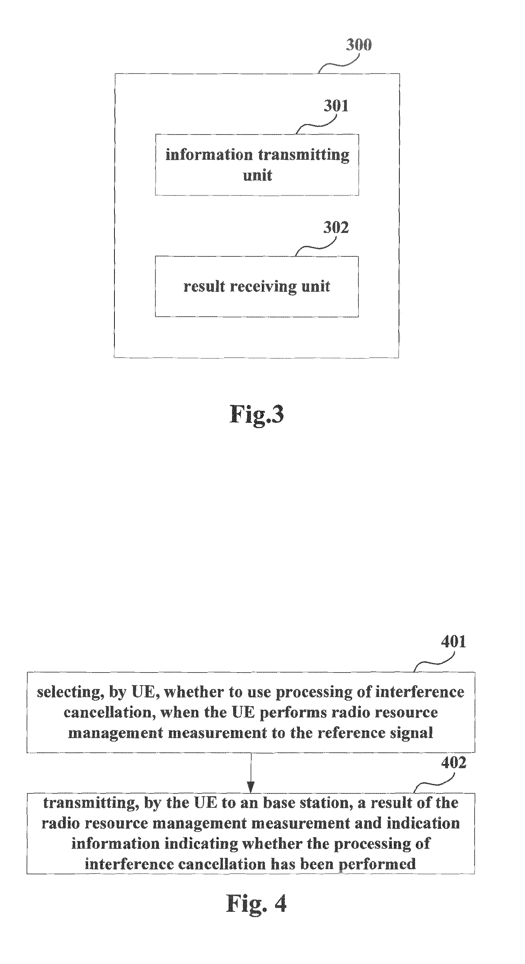

Fig. 3 is a schematic diagram of the structure of the base station of the embodiment of the present disclosure. As shown in Fig. 3, the base station 300 includes: an information transmitting unit 301 and a result receiving unit 302. The relevant art may be referred to for other parts of the base station 300, which shall not be described herein any further;
wherein, the information transmitting unit 301 is configured to transmit to UE indication information indicating whether to process the reference signal with respect to interference cancellation, when configuring the UE with radio resource management measurement; and the result receiving unit 302 is configured to receive a result of the radio resource management measurement transmitted by the UE.

In a mode of implementation, the base station is a macro base station, and the UE is served by the macro base station. And the information transmitting unit 301 is configured to transmit the indication information to the UE when a measurement object of the UE is a micro base station configured with an almost blank subframe.

In another mode of implementation, the base station is a micro base station, and the UE is served by the micro base station. And the information transmitting unit 301 is configured to transmit the indication information to the UE when a measurement object of the UE is a serving cell.

It can be seen from the above embodiment that by transmitting, by a base station to UE, indication information indicating whether to process the reference signal with respect to interference cancellation, the UE side may be enabled to measure the reference signal according to the indication information. Hence, the base station side may learn whether the UE side performs processing of interference cancellation, thereby accurately obtaining a measurement result of the reference signal.

### Embodiment 2

An embodiment of the present disclosure provides a measurement method for a reference signal, applicable to radio resource management measurement. Fig. 4 is a flowchart of the measurement method of the embodiment of the present disclosure at a UE side. As shown in Fig. 4, the measurement method includes:
step 401: selecting, by UE, whether to use processing of interference cancellation, when the UE performs radio resource management measurement on the reference signal; and
step 402: transmitting to a base station, a result of the radio resource management measurement and indication information indicating whether the processing of interference cancellation has been performed.

In this embodiment, the UE may perform the RRM measurement by using the reference signal, the reference signal may be a CRS. However, it is not limited thereto, and a particular reference signal may be determined according to an actual situation.

In this embodiment, in step 401, the UE may select to use CRS IC according to an ability of its own for a cell which may only be measured in a restricted subframe set; wherein the ability of its own may be predefined for the UE. However, the present disclosure is not limited to selecting to use CRS IC according to an ability of the UE itself. For example, the selection may be performed according to a load condition of the UE, and a particular mode of implementation may be determined according to an actual scenario.

In this embodiment, the indication information may be carried by an information element (IE), and may be one bit information added to measResult IE. That is, in performing measurement report, the UE may use one bit to indicate whether the measurement result uses the CRS interference cancellation technology, and one bit may be added into the measResult IE, for indicating the information; wherein, the relevant art may be referred to for a particular content of the measResult IE, which shall not be described herein any further.

For example, "0" may be used to indicate that the UE does not use a CRS interference technology, and "1" may be used to indicate that the UE uses a CRS interference technology. However, it is not limited thereto, for example, multiple bits may be used for indication, and a particular mode of implementation may be determined according to an actual situation.

In particular implementation, in a scenario of implementation, the base station is a macro base station, the UE is served by the macro base station, and a measurement object of the UE is a micro base station configured with an almost blank subframe.

In such a scenario of implementation, when the macro base station performs the measurement configuration on the macro UE, if the measurement object is a pico eNB configured with an ABS, the macro base station will configure that measurement of the pico eNB by the macro UE is restricted in a certain subframe set.

In particular implementation, in another scenario of implementation, the base station is a micro base station, the UE is served by the micro base station, and a measurement object of the UE is a serving cell.

In such a scenario of implementation, when a pico eNB performs measurement configuration on pico UE subjected to severe interference, if the measurement object is the serving cell, the pico eNB will configure that measurement of the serving cell by the UE is restricted in a certain subframe set.

In this embodiment, the base station side may receive a measurement report transmitted by the UE and indication information indicating whether processing of interference cancellation is performed. As the UE has indicated the measurement result using the CRS interference cancellation in the measurement report, the base station learns whether the received measurement result uses the CRS interference cancellation.

An embodiment of the present disclosure further provides UE, corresponding to the above-described measurement method, with the contents identical to those in the above-described method being not going to be described any further.

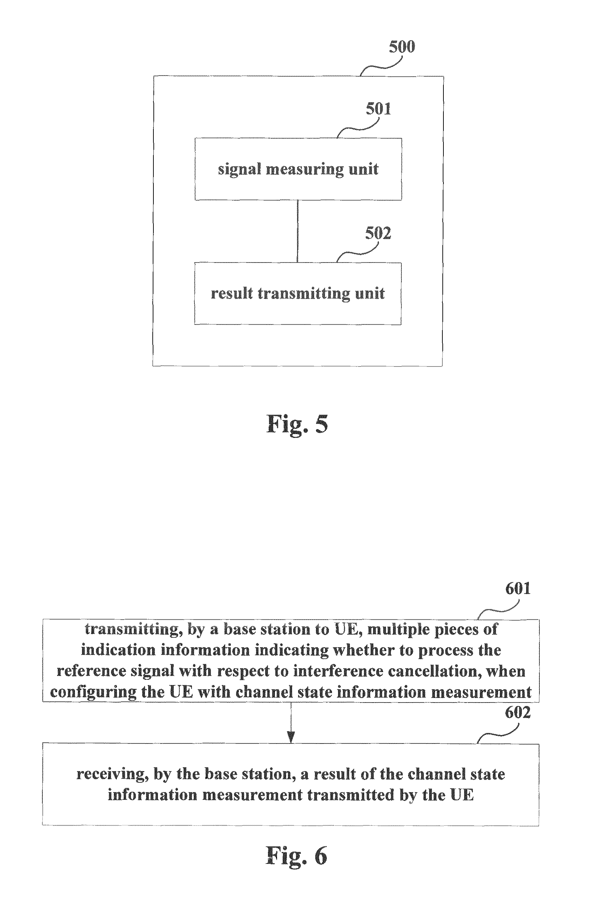

Fig. 5 is a schematic diagram of the structure of the UE of the embodiment of the present disclosure. As shown in Fig. 5, the UE 500 includes: a signal measuring unit 501 and a result transmitting unit 502. The relevant art may be referred to for other parts of the UE 500, which shall not be described herein any further;
wherein, the signal measuring unit 501 is configured to select whether to use processing of interference cancellation, when performing radio resource management measurement on a reference signal; and the result transmitting unit 502 is configured to transmit to a base station, a result of the radio resource management measurement and indication information indicating whether the processing of interference cancellation has been performed.

In a mode of implementation, the base station is a macro base station, the UE is served by the macro base station, and a measurement object of the UE is a micro base station configured with an almost blank subframe.

In another mode of implementation, the base station is a micro base station, the UE is served by the micro base station, and a measurement object of the UE is a serving cell.

It can be seen from the above embodiment that by selecting by the UE side whether to perform interference cancellation, and transmitting the indication information indicating whether to perform the interference cancellation to the base station side, the base station side may learn whether the UE side performs processing of interference cancellation, thereby accurately obtaining a measurement result of the reference signal.

### Embodiment 3

An embodiment of the present disclosure provides a measurement method for a reference signal, applicable to channel state information measurement. Fig. 6 is a flowchart of the measurement method of the embodiment of the present disclosure at a base station side. As shown in Fig. 6, the measurement method includes:
step 601: transmitting, by a base station to UE, multiple pieces of indication information indicating whether to process the reference signal with respect to interference cancellation, when configuring the UE with channel state information measurement, the multiple pieces of indication information being corresponding to multiple configured subframe sets; and
step 602: receiving, by the base station, a result of the channel state information measurement transmitted by the UE.

In this embodiment, the base station may be a micro base station (such as a pico eNB), and the UE may be served by the micro base station, and may be pico UE. The UE may perform CSI measurement by using a reference signal (such as a CRS).

In this embodiment, the micro base station may configure two subframe sets, csi-MeasSubframeSet1-r10 and csi-MeasSubframeSet2-r10, in csi-SubframePatternConfig-r10 IE; wherein, in these two subframe sets, one of them may reflect an ABS resource performance, and the other may reflect a non-ABS performance. The relevant art may be referred to for particular explanation or description of the above IE and subframe sets, which shall not be described herein any further.

In this embodiment, the micro base station may configure csi-MeasSubframeSet1-r10 and csi-MeasSubframeSet2-r10 with indication information, respectively, indicating whether to perform interference cancellation on the reference signal. That is, the pico eNB may indicate in csi-SubframePatternConfig-r10 whether the CSI measurement in the two subframe sets uses the CSI interference cancellation technology; wherein, one bit may be used for the indication information; however, it is not limited thereto.

It should be noted that the above description is given taking csi-SubframePatternConfig-r10 IE, csi-MeasSubframeSet1-r10 and csi-MeasSubframeSet2-r10 as examples, and the number of pieces of the indication information is 2. However, it is not limited thereto, and the number of pieces of the indication information may be 2 or more. A particular mode of implementation may be determined according to an actual situation.

In this embodiment, the UE may use or not use the processing of interference cancellation in performing the measurement of the reference signal according to the CSI measurement configuration of the base station side. That is, the UE uses the CSR IC technology according to that the base station definitely indicates in the measurement configuration that the CRS IC measurement is to be used; otherwise, the UE does not use the CSR IC in the measurement.

In this embodiment, the base station side may receive a CSI measurement report transmitted by the UE. As the base station has informed the UE in the CSI measurement configuration of whether interference cancellation needs to be used, the UE side may distinguish whether a subframe set needs processing of interference cancellation, and the base station may learn whether the received measurement result uses the interference cancellation, thereby accurately processing the measurement result.

An embodiment of the present disclosure further provides a base station, corresponding to the above-described measurement method, with the contents identical to those in the above-described method being not going to be described any further.

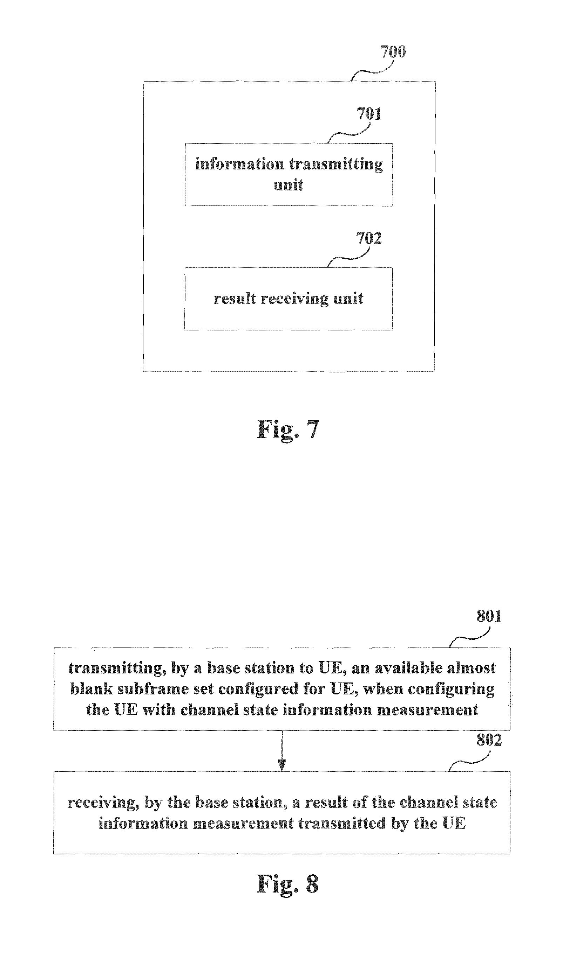

Fig. 7 is a schematic diagram of the structure of the base station of the embodiment of the present disclosure. As shown in Fig. 7, the base station 700 includes: an information transmitting unit 701 and a result receiving unit 702. The relevant art may be referred to for other parts of the base station 700, which shall not be described herein any further;
wherein, the information transmitting unit 701 is configured to transmit to UE multiple pieces of indication information indicating whether to process the reference signal with respect to interference cancellation, when configuring the UE with channel state information measurement, the multiple pieces of indication information being corresponding to multiple configured subframe sets; and the result receiving unit 702 is configured to receive a result of the channel state information measurement transmitted by the UE.

In particular implementation, the base station may be a micro base station, and the UE may be served by the micro base station. The micro base station may configure two subframe sets, csi-MeasSubframeSet1-r10 and csi-MeasSubframeSet2-r10, in csi-SubframePatternConfig-r10 IE; and the multiple pieces of indication information may be one bit information respectively adopted in csi-MeasSubframeSet1-r10 and csi-MeasSubframeSet2-r10.

It can be seen from the above embodiment that by configuring multiple subframes with indication information indicating whether to process the reference signal with respect to interference cancellation by the base station side, the UE side may be enabled to measure the reference signal according to the indication information. Hence, the base station side may learn whether the UE side performs processing of interference cancellation, thereby accurately obtaining a measurement result of the reference signal.

### Embodiment 4

An embodiment of the present disclosure provides a measurement method for a reference signal, applicable to channel state information measurement. Fig. 8 is a flowchart of the measurement method of the embodiment of the present disclosure at a base station side. As shown in Fig. 8, the measurement method includes:
step 801: transmitting, by a base station to UE, an available almost blank subframe set configured for UE, when configuring the UE with channel state information measurement; and
step 802: receiving, by the base station, a result of the channel state information measurement transmitted by the UE.

In this embodiment, the base station may be a micro base station, the UE is served by the micro base station, and the UE may perform the CSI measurement by using a reference signal (such as a CRS).

In this embodiment, the micro base station may configure two subframe sets, csi-MeasSubframeSet1-r10 and csi-MeasSubframeSet2-r10, in csi-SubframePatternConfig-r10 IE. The relevant art may be referred to for how to configure and particular contents of the subframe sets and the information element, which shall not be described herein any further.

In this embodiment, in configuring with UE with the CSI measurement, the micro base station may configure the available almost blank subframe set in RadioResourceConfigDedicated; that is, in RadioResourceConfigDedicated, the micro base station may inform the UE of the available almost blank subframe set configured by it.

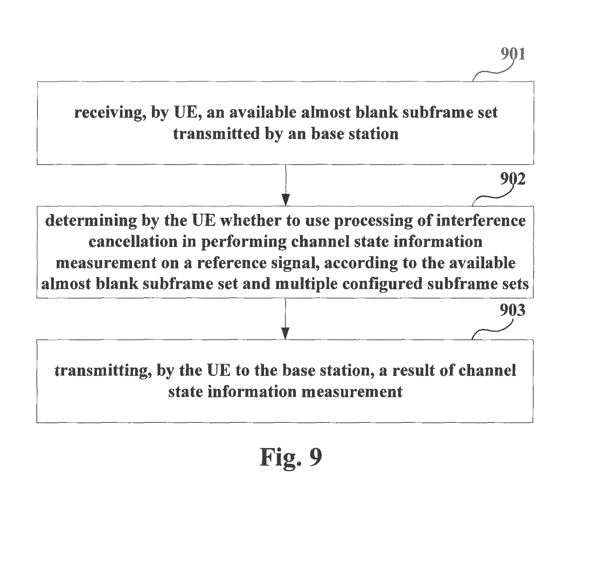

Fig. 9 is a flowchart of the measurement method of the embodiment of the present disclosure at a UE side. As shown in Fig. 9, the measurement method includes:
step 901: receiving, by UE, an available almost blank subframe set transmitted by a base station;
step 902: determining by the UE whether to use processing of interference cancellation in performing channel state information measurement on a reference signal, according to the available almost blank subframe set and multiple configured subframe sets; and
step 903: transmitting, by the UE to the base station, a result of channel state information measurement.

In this embodiment, the multiple subframe sets are subframe sets csi-MeasSubframeSet1-r10 and csi-MeasSubframeSet2-r10 in csi-SubframePatternConfig-r10 IE of the micro base station.

In this embodiment, step 902 may include:
using, by the UE, the processing of interference cancellation in the measurement of the csi-MeasSubframeSet1-r10, when an intersection of the csi-MeasSubframeSet1-r10 and the available almost blank subframe set is not empty; or using the processing of interference cancellation in the measurement of the csi-MeasSubframeSet2-r10, when an intersection of the csi-MeasSubframeSet2-r10 and the available almost blank subframe set is not empty.

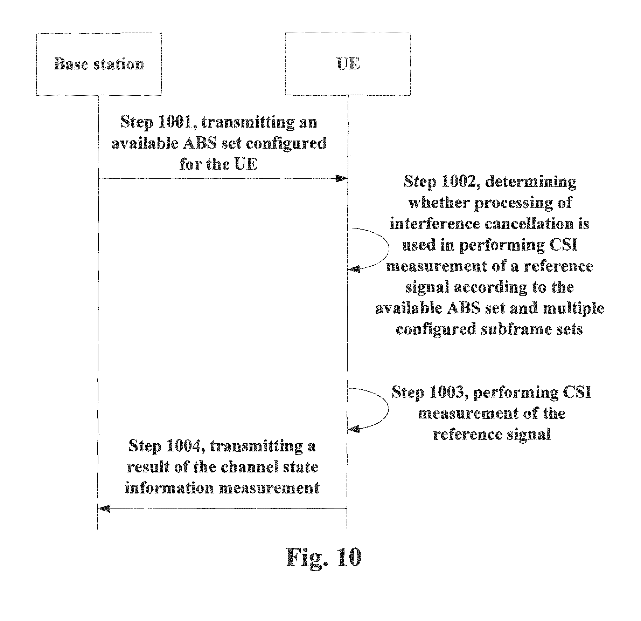

Fig. 10 is another flowchart of the measurement method of the embodiment of the present disclosure, which is described from a base station side and a UE side. As shown in Fig. 10, the measurement method includes:
step 1001: transmitting, by a base station to UE, an available almost blank subframe set configured for the UE, when configuring the UE with channel state information measurement;
step 1002: determining, by the UE, whether processing of interference cancellation is used in performing channel state information measurement of a reference signal according to the available almost blank subframe set and multiple configured subframe sets, after receiving the available almost blank subframe set transmitted by the base station;
step 1003: performing, by the UE, channel state information measurement of the reference signal; and
step 1004: transmitting, by the UE to the base station, a result of the channel state information measurement.

In this embodiment, the UE may determine whether processing of interference cancellation is used in performing channel state information measurement of the reference signal according to whether an intersection of the measurement set and the available ABS set is empty. Then the UE may transmit the result of measurement to the base station. After receiving the result of measurement, the base station may judge whether a received CSI measurement report uses a CRS interference cancellation technology according to whether an intersection of a CSI measurement set and the available ABS set is empty.

An embodiment of the present disclosure further provides a base station and UE, corresponding to the above-described measurement method, with the contents identical to those in the above-described method being not going to be described any further.

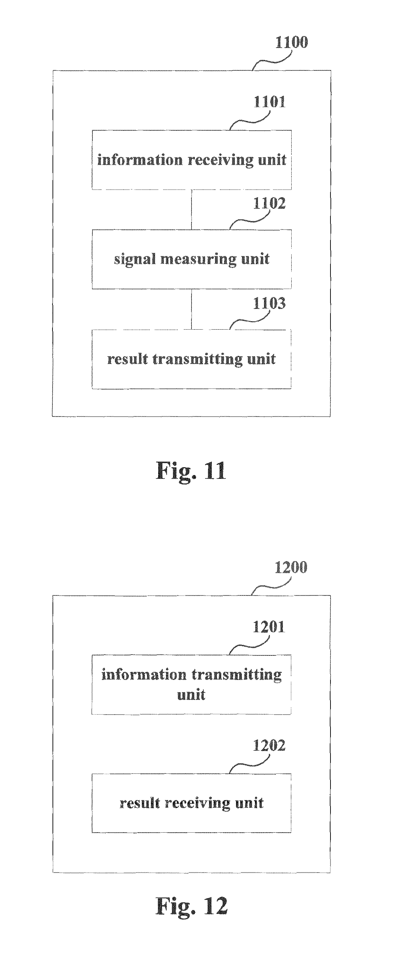

Fig. 11 is a schematic diagram of the structure of the UE of the embodiment of the present disclosure. As shown in Fig. 11, the UE 1100 includes: an information receiving unit 1101, a signal measuring unit 1102 and a result transmitting unit 1103. The relevant art may be referred to for other parts of the UE 1100, which shall not be described herein any further;
wherein, the information receiving unit 1101 is configured to receive an available almost blank subframe set transmitted by a base station; the signal measuring unit 1102 is configured to determine whether to use processing of interference cancellation in performing channel state information measurement on a reference signal, according to the available almost blank subframe set and multiple configured subframe sets; and the result transmitting unit 1103 is configured to transmit a result of channel state information measurement to the base station.

In particular implementation, the base station may be a micro base station, and the UE is served by the micro base station; and wherein the multiple subframe sets are two subframe sets, csi-MeasSubframeSet1-r10 and csi-MeasSubframeSet2-r10, configured by the micro base station in csi-SubframePatternConfig-r10 IE.

In this embodiment, the signal measuring unit 1102 is configured to use the processing of interference cancellation in the measurement of the csi-MeasSubframeSetl-r10, when an intersection of the csi-MeasSubframeSet1-r10 and the available almost blank subframe set is not empty; or using the processing of interference cancellation in the measurement of the csi-MeasSubframeSet2-r10, when an intersection of the csi-MeasSubframeSet2-r10 and the available almost blank subframe set is not empty.

Fig. 12 is a schematic diagram of the structure of the base station of the embodiment of the present disclosure. As shown in Fig. 12, the base station 1200 includes: an information transmitting unit 1201 and a result receiving unit 1202. The relevant art may be referred to for other parts of the base station 1200, which shall not be described herein any further;
wherein, the information transmitting unit 1201 is configured to transmit to UE, an available almost blank subframe configured for the UE, when configuring the UE with channel state information measurement; and the result receiving unit 1202 is configured to receive a result of the channel state information measurement transmitted by the UE.

In particular implementation, the base station may be a micro base station, and the UE is served by the micro base station; and the micro base station configures the available almost blank subframe set in RadioResourceConfigDedicated; and the micro base station configures two subframe sets, csi-MeasSubframeSet1-r10 and csi-MeasSubframeSet2-r10, in csi-SubframePatternConfig-r10 IE.

It can be seen from the above embodiment that by transmitting the available ABS set by the base station to the UE side, the UE side determines whether to perform processing of interference cancellation according to the available ABS set and the measurement sets. Therefore, the base station side may learn whether the UE side performs processing of interference cancellation, thereby accurately obtaining a measurement result of the reference signal.

An embodiment of the present disclosure further provides a computer-readable program, wherein when the program is executed in a base station, the program enables a computer to carry out the measurement method for a reference signal as described above in the base station.

An embodiment of the present disclosure further provides a storage medium in which a computer-readable program is stored, wherein the computer-readable program enables a computer to carry out the measurement method for a reference signal as described above in a base station.

An embodiment of the present disclosure further provides a computer-readable program, wherein when the program is executed in UE, the program enables a computer to carry out the measurement method for a reference signal as described above in the UE.

An embodiment of the present disclosure further provides a storage medium in which a computer-readable program is stored, wherein the computer-readable program enables a computer to carry out the measurement method for a reference signal as described above in UE.

The above apparatus and method of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figs. 13-20 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

## Claims

1. A measurement method for a reference signal, comprising:
transmitting, by a base station to UE, indication information indicating whether to process the reference signal with respect to interference cancellation, when configuring the UE with radio resource management measurement; and
receiving, by the base station, a result of the radio resource management measurement transmitted by the UE.

2. The measurement method according to claim 1, wherein the base station is a macro base station, and the UE is served by the macro base station;
and the macro base station transmits the indication information to the UE when a measurement object of the UE is a micro base station configured with an almost blank subframe.

3. The measurement method according to claim 1, wherein the base station is a micro base station, and the UE is served by the micro base station;
and the micro base station transmits the indication information to the UE when a measurement object of the UE is a serving cell.

4. The measurement method according to any one of claims 1-3, wherein the indication information is one bit information added to CellsToAddMod IE.

5. A measurement method for a reference signal, comprising:
selecting, by UE, whether to use processing of interference cancellation, when the UE performs radio resource management measurement on the reference signal; and
transmitting to a base station, a result of the radio resource management measurement and indication information indicating whether the processing of interference cancellation has been performed.

6. The measurement method according to claim 5, wherein the base station is a macro base station, the UE is served by the macro base station, and a measurement object of the UE is a micro base station configured with an almost blank subframe.

7. The measurement method according to claim 5, wherein the base station is a micro base station, the UE is served by the micro base station, and a measurement object of the UE is a serving cell.

8. The measurement method according to any one of claims 5-7, wherein the indication information is one bit information added to measResult IE.

9. A measurement method for a reference signal, comprising:
transmitting, by a base station to UE, multiple pieces of indication information indicating whether to process the reference signal with respect to interference cancellation, when configuring the UE with channel state information measurement, the multiple pieces of indication information being corresponding to multiple configured subframe sets; and
receiving, by the base station, a result of the channel state information measurement transmitted by the UE.

10. The measurement method according to claim 9, wherein the base station is a micro base station, and the UE is served by the micro base station; the multiple subframe sets are two subframe sets, csi-MeasSubframeSet1-r10 and csi-MeasSubframeSet2-r10, configured by the micro base station in csi-SubframePatternConfig-r10 IE; and the multiple pieces of indication information are one bit information respectively adopted in the csi-MeasSubframeSet1-r10 and csi-MeasSubframeSet2-r10.

11. A measurement method for a reference signal, comprising:
receiving, by UE, an available almost blank subframe set transmitted by a base station;
determining whether to use processing of interference cancellation in performing channel state information measurement on the reference signal, according to the available almost blank subframe set and multiple configured subframe sets; and
transmitting, by the UE to the base station, a result of channel state information measurement.

12. The measurement method according to claim 11, wherein the base station is a micro base station, and the UE is served by the micro base station;
and the multiple subframe sets are two subframe sets, csi-MeasSubframeSet1-r10 and csi-MeasSubframeSet2-r10, configured by the micro base station in csi-SubframePatternConfig-r10 IE.

13. The measurement method according to claim 12, wherein the determining whether to use processing of interference cancellation in performing channel state information measurement on the reference signal according to the available almost blank subframe set and multiple configured subframe sets comprises:
using, by the UE, the processing of interference cancellation in the measurement of the csi-MeasSubframeSet1-r10, when an intersection of the csi-MeasSubframeSet1-r10 and the available almost blank subframe set is not empty; or
using the processing of interference cancellation in the measurement of the csi-MeasSubframeSet2-r10, when an intersection of the csi-MeasSubframeSet2-r10 and the available almost blank subframe set is not empty.

14. A measurement method for a reference signal, comprising:
transmitting, by a base station to UE, an available almost blank subframe set configured for the UE, when configuring the UE with channel state information measurement; and
receiving, by the base station, a result of the channel state information measurement transmitted by the UE.

15. The measurement method according to claim 14, wherein the base station is a micro base station, and the UE is served by the micro base station; and in configuring the UE with the measurement, the micro base station configures the available almost blank subframe set in RadioResourceConfigDedicated;
and the micro base station configures two subframe sets, csi-MeasSubframeSet1-r10 and csi-MeasSubframeSet2-r10, in csi-SubframePatternConfig-r10 IE.

16. A base station, comprising:
an information transmitting unit, configured to transmit to UE indication information indicating whether to process a reference signal with respect to interference cancellation, when configuring the UE with radio resource management measurement; and
a result receiving unit, configured to receive a result of the radio resource management measurement transmitted by the UE.

17. The base station according to claim 16, wherein the base station is a macro base station, and the UE is served by the macro base station;
and the information transmitting unit transmits the indication information to the UE when a measurement object of the UE is a micro base station configured with an almost blank subframe.

18. The base station according to claim 16, wherein the base station is a micro base station, and the UE is served by the micro base station;
and the information transmitting unit transmits the indication information to the UE when a measurement object of the UE is a serving cell.

19. UE, comprising:
a signal measuring unit, configured to select whether to use processing of interference cancellation, when performing radio resource management measurement on a reference signal; and
a result transmitting unit, configured to transmit to a base station, a result of the radio resource management measurement and indication information indicating whether the processing of interference cancellation has been performed.

20. The UE according to claim 19, wherein the base station is a macro base station, the UE is served by the macro base station, and a measurement object of the UE is a micro base station configured with an almost blank subframe.

21. The UE according to claim 19, wherein the base station is a micro base station, the UE is served by the micro base station, and a measurement object of the UE is a serving cell.

22. Abase station, comprising:
an information transmitting unit, configured to transmit to UE multiple pieces of indication information indicating whether to process a reference signal with respect to interference cancellation, when configuring the UE with channel state information measurement, the multiple pieces of indication information being corresponding to multiple configured subframe sets; and
a result receiving unit, configured to receive a result of the channel state information measurement transmitted by the UE.

23. The base station according to claim 22, wherein the base station is a micro base station, and the UE is served by the micro base station; the multiple subframe sets are two subframe sets, csi-MeasSubframeSet1-r10 and csi-MeasSubframeSet2-r10, configured by the micro base station in csi-SubframePatternConfig-r10 IE; and the multiple pieces of indication information are one bit information respectively adopted in the csi-MeasSubframeSet1-r10 and csi-MeasSubframeSet2-r10.

24. UE, comprising:
an information receiving unit, configured to receive an available almost blank subframe set transmitted by a base station;
a signal measuring unit, configured to determine whether to use processing of interference cancellation in performing channel state information measurement on a reference signal, according to the available almost blank subframe set and multiple configured subframe sets; and
a result transmitting unit, configured to transmit a result of channel state information measurement to the base station.

25. The UE according to claim 24, wherein the base station is a micro base station, and the UE is served by the micro base station; and the multiple subframe sets are two subframe sets, csi-MeasSubframeSet1-r10 and csi-MeasSubframeSet2-r10, configured by the micro base station in csi-SubframePatternConfig-r10 IE.

26. The UE according to claim 25, wherein the signal measuring unit is configured to use the processing of interference cancellation in the measurement of the csi-MeasSubframeSet1-r10, when an intersection of the csi-MeasSubframeSet1-r10 and the available almost blank subframe set is not empty; or
using the processing of interference cancellation in the measurement of the csi-MeasSubframeSet2-r10, when an intersection of the csi-MeasSubframeSet2-r10 and the available almost blank subframe set is not empty.

27. A base station, comprising:
an information transmitting unit, configured to transmit to UE, an available almost blank subframe set configured for the UE, when configuring the UE with channel state information measurement; and
a result receiving unit, configured to receive a result of the channel state information measurement transmitted by the UE.

28. The base station according to claim 27, wherein the base station is a micro base station, and the UE is served by the micro base station; and the micro base station configures the available almost blank subframe set in RadioResourceConfigDedicated; and the micro base station configures two subframe sets, csi-MeasSubframeSet1-r10 and csi-MeasSubframeSet2-r10, in csi-SubframePatternConfig-r10 IE.

29. A computer-readable program, wherein when the program is executed in a base station, the program enables a computer to carry out the measurement method for a reference signal as claimed in any one of claims 1-4, 9 or 10, 14 or 15, in the base station.

30. A storage medium in which a computer-readable program is stored, wherein the computer-readable program enables a computer to carry out the measurement method for a reference signal as claimed in any one of claims 1-4, 9 or 10, 14 or 15, in a base station.

31. A computer-readable program, wherein when the program is executed in UE, the program enables a computer to carry out the measurement method for a reference signal as claimed in any one of claims 5-8, or 11-13, in the UE.

32. A storage medium in which a computer-readable program is stored, wherein the computer-readable program enables a computer to carry out the measurement method for a reference signal as claimed in any one of claims 5-8, or 11-13, in UE.
